# NEUE EUROPÄISCHE PATENTSCHRIFT

(11) **EP 0 061 670 B2**
(45) Veröffentlichungstag und Bekanntmachung des Hinweises auf die Entscheidung über den Einspruch: **01.06.1994**
(45) Hinweis auf die Patenterteilung: 12.06.1985
(21) Anmeldenummer: 82102273.8
(22) Anmeldetag: 19.03.1982
(51) Int. Cl.: D06P 3/32, D06P 3/30, C09B 45/00, C09B 55/00, D06P 1/10, D06P 1/13

(54) **Verfahren zum Färben von Leder und Pelzen mit Farbstoffmischungen**
Process for dyeing leather and pelts with dye mixtures
Procédé de teinture de cuir et de peaux avec des mélanges de colorants

(30) Priorität: 23.03.1981 CH 1953/81; 21.12.1981 CH 8158/81
(43) Veröffentlichungstag der Anmeldung: 06.10.1982
(73) Patentinhaber: CIBA-GEIGY AG, 4002 Basel (CH)
(72) Erfinder: Püntener, Alois, Dr., CH-4310 Rheinfelden (CH); Koller, Josef, CH-4153 Reinach (CH); Beffa, Fabio, Dr., CH-4125 Riehen (CH)
(74) Vertreter: Zumstein, Fritz, Dr.

(56) Entgegenhaltungen:
- EP-A- 0 019 128
- EP-A- 0 022 067
- EP-A- 0 044 937
- EP-A- 0 045 276
- EP-A- 0 055 808
- EP-A- 0 092 923
- CH-A- 319 913
- CH-A- 616 697
- DE-A- 2 404 314
- DE-A- 2 856 883
- DE-A- 3 018 761
- FR-A- 2 235 172
- FR-A- 2 292 800
- FR-E- 40 844
- US-A- 3 972 675
- Prospekt von VONDELINGEN-PLAAT (semaine du cuir, Sept. 1977)
- Boletin Tecnico AQEIC, Nr. 5, Mai 1967, S. 109-118
- J. Herndl und Haldemann "Dyeing Chrome-tanned Leather", J.S.D.C. 77, S. 646-656 (1961)
- International Glossary of Leather Terms, 2. Auflage, S. 52-55
- Gerhard Otto "Das Färben des Leders", S. 28-34 und 111-121, Darmstadt 1962
- ACNA Studio No. 5507/T/65, 20.11.1979
- Sandoz Musterkarte Nr. 0199/74 "Dying Shearling-Suede and Wool", S. 13-26
- 18. Arbeitstagung des deutschen Wollforschungsinstituts (Aachen/Oktober 1974): Beitrag von C. Brouard und H. Minvielle: "Entwicklung und Anwendungsgebiete der Neutrichrom-S-Farbstoffe", S. 307
- I.C.I.-Musterkarte Nr. 21409 (1973) "Dyestuffs for fullchrome suede split leathers", S. 1-5 und 35-43
- I.C.I.-Technische Information D 946 (1974) "Anwendung der Procilanfarbstoffe auf Leder".
- Leder- und Häutemarkt 18, 1966, S. 308-312
- Ortolan-Farbstoffe auf Leder, BASF (7.62)
- Bürst- und Farbfärbungen auf Chromhandschuhleder mit Basacrylfarbstoffen, BASF (6.59)
- Velourslederfärbungen mit Luminfarbstoffen, BASF (10.59)
- Schweissechte Färbungen von Chromledern, BASF (1.64)
- M. Söll, Textil-Praxis (1970), S. 421-428
- Vorschrift VESLIC, C1510, IUF 151, vom 11.12.1969
- Basacryl-Farbstoffe als Aufsatz für vorgefärbte Handschuhleder, BASF (12.59)

## Beschreibung

Die vorliegende Erfindung betrifft das Trichromiefärben von Leder mit Mischungen von 1:2-Chrom- oder Kobaltkomplexfarbstoffen sowie das nach diesem Verfahren gefärbte Leder.

Die Verwendung von 1:2-Chrom- oder Kobaltkomplexfarbstoffen zum Färben von Leder ist schon lange bekannt. Zuweilen werden auch Mischungen dieser Farbstoffe eingesetzt. Dabei treten jedoch häufig Schwierigkeiten auf wegen dergrossen Affinitätsunterschiede der verschiedenen Farbstoffe zum Leder, so dass meistens nur Mischungen von Farbstoffen verwendet werden können, die ähnliche Farbnuancen aufweisen.

Mischungen von drei Farbstoffen und insbesondere ein Trichromie von Farbstoffen, d.h. eine Mischung aus einem gelben, einem roten und einem blauen Farbstoff, mit der man je nach den Mengenverhältnissen der drei Komponenten praktisch alle Farbnuancen erzielen kann, wurden bisherfür Leder nicht verwendet und von der Fachwelt auch für nicht möglich gehalten. So stellt K. Eitel in Bayer Farben Revue, Sonderheft 19, Seite 31 (1981) fest: "Zum Färben von Leder ist die Trichromie wegen der grossen Mannigfaltigkeit der Fabrikate und ihrem unterschiedlichen färberischen Verhalten, vor allem aber wegen der stark voneinander abweichenden Farbstoffaffinität von Fleisch- und Narbenseite vorerst nicht zugänglich".

Die EP-A-022 067 beschreibt ein Verfahren zum einbadigen Färben und Gerben von Fellen oder Pelzen. Nach diesem Verfahren wird vorwiegend die Haarseite des Felles oder Pelzes gefärbt, während die Lederseite nur schwach angefärbt wird.

Die CH-A-616 697 betrifft ein Verfahren zur Herstellung von 1:2-Metallkomplexen von Azofarbstoffen und deren Verwendung zum Färben von Leder. In dieser Patentschrift sind jedoch nur Farbstoffmischungen von Farbstoffen ähnlicher Nuance und nicht von Farbstoffen unterschiedlicher Farbe beschrieben.

Diese beiden Literaturstellen geben also keinerlei Hinweis darauf, dass man Leder mit Mischungen von Farbstoffen unterschiedlicher Farbe färben kann, wenn man Farbstoffe auswählt, welche bestimmte Kriterien erfüllen.

Der vorliegenden Erfindung lag die Aufgabe zugrunde, ein Verfahren zum Färben von Leder mit Mischungen aus drei und mehr Farbstoffen mit unterschiedlicher Farbe zu entwickeln, welches das Färben unterschiedlicher Ledersorten gestattet und zudem das Trichromie-Verfahren ermöglicht.

Diese Aufgabe wird erfindungsgemäss gelöst, indem man für die Farbstoffmischungen solche Farbstoffe auswählt, welche eine ähnliche Eindringtiefe und nur eine geringe Neigung zurAggregation in elektrolythaltiger wässriger Lösung aufweisen. Mit solchen Mischungen lässt sich sogar das Trichromie-Verfahren durchführen und man erhält überraschenderweise unabhängig von der Lederart egale Färbungen, wobei die Narben- und die Fleischseite des Leders in nahezu gleicher, in vielen Fällen sogar in identischer Nuance gefärbt werden. Die erhaltenen Färbungen weisen gute Echtheiten, insbesondere eine gute Lichtechtheit und Diffusionsechtheit gegen Weich-PVC auf.

Gegenstand der vorliegenden Erfindung ist ein Verfahren zum Trichromiefärben von Leder mit Farbstoffmischungen, dadurch gekennzeichnet, dass man drei unabhängig voneinander hergestellte Farbstoffe der Nuancen Gelb, Rot und Blau, die jeweils keinen faserreaktiven Rest aufweisen und einem symmetrischen 1:2-Komplex der Formel I 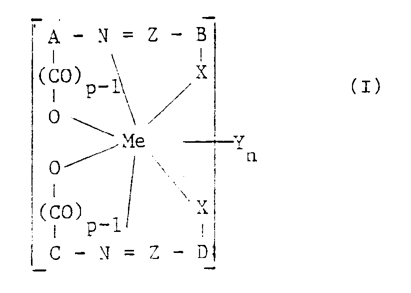 entsprechen, worin
Z Stickstoff oder eine CH-Gruppe,
A und C identische Reste der Benzol- oder Naphthalinreihe, welche in o-Stellung zur Azo- oder Azomethingruppe eine Hydroxy- oder Carboxygruppe enthalten,
B und D identische Reste einer Kupplungskomponente, wenn Z Stickstoff ist, wobei die Kupplungskomponente in o- bzw. a-Stellung zurAzogruppe die Gruppe X enthält, oder identische Reste eines o-Hydroxyaldehyds, wenn Z die CH-Gruppe darstellt,
X Sauerstoff oder eine Gruppe der Formel-NR-, worin R Wasserstoff oder eine C₁-C₄-Alkylgruppe darstellt,
Me Chrom oder Kobalt,
Y die S0₃H-Gruppe,
p 1 oder 2, und
n die Zahl 2 bedeutet,
und worin die Farbstoffe
a) keine oder nur eine geringe Neigung zurAggregation in elektrolythaltiger, wässriger Lösung zeigen und
b) auf Standard-Chromleder eine Eindringtiefe zwischen 20 und 200 µm aufweisen, wobei die Unterschiede in der Eindringtiefe dereinzelnen Farbstoffe des Gemisches innerhalb eines Bereichs von 50 µm liegen, in einem beliebigen Mengenverhältnis mischt und mit dieser Farbstoffmischung das Leder in wässriger Flotte färbt.

Die angegebenen Werte für die Eindringtiefe beziehen sich auf Standardchromkalbleder, hergestellt z.B. gemäss der Vorschrift VESLIC, C 1510, IUF 151 vom 11.12.1969 des Vereins schweiz. Lederindustriechemiker und gelten für eine Färbung in 1/1 Richttyptiefe, welche gemäss den Färbebedingungen des Beispiels 3 der vorliegenden Anmeldung durchgeführt wurde, wobei die Eindringtiefe anhand eines Querschnitts durch das Leder unter dem Mikroskop gemessen wird.

Unter Farbstoffen, welche keine oder nur eine geringe Neigung zurAggregation in elektrolythaltigerwässriger Lösung zeigen, werden solche verstanden, bei denen die Absorption des Lichtes einer wässrigen Lösung, welche 50 mg/l Farbstoff und 10 g/l NaCl enthält, um höchstens 5%, vorzugsweise um höchstens 2% niedriger ist, als die Absorption einer Lösung der gleichen Menge des Farbstoffes in destilliertem Wasser, wobei die Verminderung der Absorption im Absorptionsmaximum bestimmt wird.

Bevorzugt werden im erfindungsgemässen Verfahren Mischungen solcher Farbstoffe verwendet, welche ein ähnliches Aufziehverhalten aufweisen, d.h. solche, bei denen die Nuance des während der einzelnen Zeiträume des Färbeprozesses auf das Leder aufziehenden Anteils des Farbstoffgemisches sich während des gesamten Färbeprozesses nur wenig oder gar nicht ändert.

Vorzugsweise verwendet man Farbstoffe, welche eine Eindringtiefe von 30 bis 150 µm aufweisen.

Die erfindungsgemäss verwendeten Farbstoffe sind infolge ihrer Hydrophilie sehr gut wasserlöslich.

Unter gelben Farbstoffen sind alle Farbstoffe mit gelber Nuance zu verstehen, z.B. gelbbraune oder auch rotstichig oder grünstichig gelbe Farbstoffe. Die orangefarbenen bis rotbraunen Farbstoffe werden insgesamt als rote Farbstoffe bezeichnet und die blauen, grauen oder violetten Farbstoffe als blaue Farbstoffe.

Die Farbstoffe sind anionischer Natur und werden vorteilhaft in Form ihrer Salze, insbesondere Alkalisalze, wie z.B. Lithium-, Kalium- oder Natriumsalze, oderals Ammoniumsalze eingesetzt. UnterAmmoniumsalzen sind auch Salze organischer Amine zu verstehen, z.B. solcher, die mit C₁-C₆-Alkyl oder Hydroxy-C₁-C₆- alkylgruppen substituiert sind.

Von den Farbstoffen der Formel I werden vorzugsweise diejenigen verwendet, bei denen X Sauerstoff bedeutet.

Ferner werden vorzugsweise solche Farbstoffe der Formel I verwendet, bei denen p gleich 1 ist.

Vorzugsweise enthalten die einzelnene Farbstoffe der verwendeten Farbstoffmischungen jeweils 24 bis 40 C-Atome, insbesondere 28 bis 36 C-Atome und vor allem 32 C-Atome.

Vorzugsweise liegt das Molekulargewicht der erfindungsgemäss verwendeten 1:2-Metallkomplexfarbstoffe zwischen 800 und 1000 (berechnet als freie Säure).

Die Reste A und C können eine Sulfosäuregruppe tragen und ausserdem weitersubstituiert sein, insbesondere mit C₁-C₄-Alkyl oder -Alkoxy, Chlor oder Nitro.

Geeignete Diazokomponenten A und C sind z.B.: Anthranilsäure, 4- oder 5-Sulfoanthranilsäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-und 4-Methyl-6-nitro-2-amino-1-hydroxybenzol, 6-Chlor-4-nitro-2-amino-1-hydroxybenzol, 4-Cyan-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 4,6-Dinitro-2-amino-1-hydroxybenzol, 2-Amino-1-hydroxybenzol-4- oder -5-sulfosäure, 4-Nitro-2-amino-1-hydroxybenzol-6-sulfosäure, 5-Nitro- oder 6-Nitro-2-amino-1-hydroxybenzol-4-sulfosäure, 6-Chlor-2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Amino-2-hydroxy-6-nitronaphthalin-4-sulfosäure, oder 1-Amino-2-hydroxybenzol-4-sulfonsäureamid oder4-Methylsulfonyl-2-amino-1-hydroxybenzol.

Vorzugsweise stellen A und C jeweils den Rest
eines 1-Hydroxy-2-aminobenzols dar, welcher gegebenenfalls ein- oder mehrmals durch gleiche oder verschiedene Substituenten aus der Reihe Nitro, Sulfo, Chlor, Methyl oder Methoxy substituiert ist, und insbesondere den Rest eines 1-Hydroxy-2-aminobenzols, der in 4- oder 5-Stellung eine Nitrogruppe trägt oder den Rest eines 1-Hydroxy-2-aminobenzols, der in 4-Stellung eine Nitrogruppe und in 6-Stellung eine Sulfogruppe trägt, oder den Rest eines 1-Hydroxy-2-aminobenzols, der in 4-Stellung eine Sulfogruppe und in 6-Stellung eine Nitrogruppe trägt.

Die Reste B bzw. D leiten sich vorzugsweise von folgenden Gruppen von Kupplungskomponenten ab: gegebenenfalls durch niedermolekulares Alkyl oderAlkoxy, Amino oderAcylamino substituierte in o-Stellung kuppelnde Phenole, wobei Acylamino C₁-C₄-Alkanoylamino-, C₁-C₄-Alkylsulfonylamino-, C₁-C₄-Alkoxycarbonyla- mino-, Aroylamino- oder Arylsulfonylamino-reste bedeutet,
Resorcin, m-Phenylendiamin, gegebenenfalls in 4-Stellung substituiert durch Sulfo, Chlor, Methyl oder Methoxy, Naphthole, die gegebenenfalls mit C₁-C₄-Alkyl oderAlkoxy, Chlor, Amino, Acylamino oder Sulfo substituiert sind, wobei Acylamino dieselbe Bedeutung hat, die vorne angegeben ist,
5-Pyrazolone oder 5-Aminopyrazole, die in 1-Stellung einen gegebenenfalls mit Chlor, Nitro, C₁-C₄-Alkyl- oder Alkoxygruppen oder Sulfogruppen substituierten Phenyl- oder Naphthylrest besitzen und in 3-Stellung eine C₁-C₄-Alkylgruppe, insbesondere eine Methylgruppe aufweisen.

Acetessigsäureamide, Acetessigsäureanilide und Benzoylessigsäureanilide, die im Anilidkern gegebenenfalls mit Chlor, C₁-C₄-Alkyl- oder Alkoxy- oder Sulfogruppen substituiert sein können, oder 6-Hydroxy-3-cyano- oder 6-Hydroxy-3-carbonamido-4-alkyl-2-pyridone, die in 1-Stellung durch gegebenenfalls substituiertes C₁-C₄-Alkyl, z.B. Methyl, Isopropyl, β-Hydroxyäthyl, β-Aminoäthyl odery-Isopropoxypropyl oder durch Phenyl substituiert sind, und in 4-Stellung eine C₁-C₄-Alkylgruppe, insbesondere Methyl, tragen können.

Beispiele solcher Kupplungskomponenten sind: 2-Naphthol, 1,3- oder 1,5-Dihydroxynaphthalin, 1-Naphthol, 1-Acetylamino-7-naphthol, 1-Propionylamino-7-naphthol, 1-Carbomethoxyamino-7-naphthol, 1-Carboäthoxyamino-7-naphthol, 1-Carbopropoxyamino-7-naphthol, 6-Acetyl-2-naphthol, 2-Naphthol-3-, -4-, -5-, -6-, -7- oder -8-sulfo- säure, 1-Naphthol-3-, -4- oder -5-sulfosäure,

4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Aminonaphthalin-6- oder -5-sulfosäure, 1-Phenyl-3-methylpyrazol-5-on, 1-Phenyl-5-pyrazolon-3-carbonsäureamid, 1-(2'-, 3'- oder 4'-Methylphenyl)-3-methylpyrazol-5-on, 1-(2'-, 3'- oder 4'-Sulfophenyl)-3-methylpyrazol-5-on, 1-(2'-Chlor-5'-sulfophenyl)-3-methylpyrazol-5-on, 1-(2'- oder4'-Methoxyphenyl)-3-methylpyrazol-5-on, 1-(2'-, 3'-oder4'-Chlorphenyl)-3-methylpyrazol-5-on, 1-(2'-, 3'- oder 4'-Nitrophenyl)-3-methylpyrazol-5-on, 1-(2',5'- oder 3',4'-Dichlorphenyl)-3-methylpyrazol-5-on, 1-(2',5'-Dichlor-4'-sulfophenyl)-3-methyl-pyrazol-5-on, 1-(2'-, 3'- oder 4'-Sulfophenyl)-3-methyl-5-aminopyrazol, 1-(2'-Chlor-5'-sulfophenyl)-3-methyl-5-aminopyrazol, Acetoacetanilid, Acetoacetanilid-2-,-3-oder-4-sulfosäure,Acetoacet-o-anisidid,Acetoacet-o-toluidid, Acetoacet-o-chloranilid, Acetoacet-m-xylidid,Tetralol, 4-Methylphenol, 3-Dialkylaminophenol, besonders 3-Dimethylamino- und 3-Diäthylaminophenol, 4-Butylphenol, 4-Amylphenol, insbesondere 4-t-Amylphenol, 2-Isopropyl-4-methylphenol, 2- oder 3-Acetylamino-4-methylphenol, 2-Methoxycarbonyl-amino-4-methylphenol, 2-Aethoxycarbonylamino-4-methylphenol und 3,4-Dimethylphenol, Resorcin, 1-Aethyl-3-cyano-4-methyl-6-hydroxypyridon,1-Methyl-3-cyano-4-methyl-6-hydroxypyridon, 1-Phenyl-3-carbonamido-4-methyl-6-hydroxypyridon.

Vorzugsweise stellt B bzw. D ein 1- oder 2-Naphthol,gegebenenfalls substituiert mit einer Sulfogruppe, m-Phenylendiamin, Resorcin, p-Alkyl(C₁-C₄)-Phenol, 1-Phenyl-3-methyl-5-pyrazolon oderAcetessigsäureanilid dar, wobei die Phenylgruppe in den beiden letztgenannten Verbindungen durch C₁-C₄-Alkyl, C₁-C₄-Alkoxy, Chlor oder Sulfo substituiert sein kann.

Sofern Z die -CH-Gruppe ist, stellt B bzw. D den Rest eines o-Hydroxyaldehyds dar, vorzugsweise den Rest eines--o-Hydroxybenzaldehyds oder o-Hydroxynaphthaldehyds. Geeignete Aldehyde sind beispielsweise: 2-Hydroxy-1-naphthaldehyd, 1-Hydroxy-2-naphthaldehyd, 2-Hydroxy-benzaldehyd, 3- und 5-Methyl-2-hydroxybenzaldehyd, 3,5-Dimethyl-2-hydroxy- benzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, 5-(Phenylazo)-2-hydroxybenzaldehyd, 5-(2'-,3'-oder 4'-Sulfophenylazo)-2-hydroxybenzaldehyd oder 5-(6'-Sulfonaphthyl-1'-azo)-2-hydroxybenzaldehyd.

Wegen der leichten Zugänglichkeit und ihrer guten Kombinierbarkeit untereinander sind für das erfindungsgemässe Färbeverfahren insbesondere Mischungen von Farbstoffen geeignet, welche der Formel II 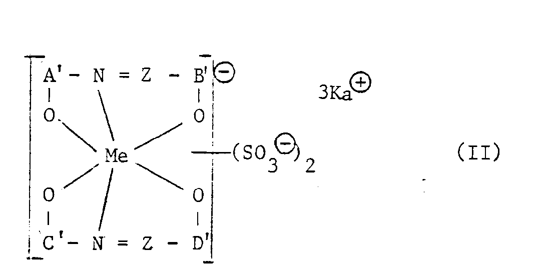 entsprechen, worin
Z Stickstoff oder eine CH-Gruppe,
A' und C' jeweils den Rest eines 1-Hydroxy-2-aminobenzols bedeuten, der in 4- oder 5-Stellung eine Nitrogruppe trägt, oder den Rest eines 1-Hydroxy-2-aminobenzols, der in 4-Stellung eine Nitrogruppe und in 6-Stellung eine Sulfogruppe trägt oder den Rest eines 1-Hydroxy-2-aminobenzols, der in 6-Stellung eine Nitrogruppe trägt und in 4-Stellung eine Sulfogruppe,
B' und D' jeweils den Rest einer der folgenden Kupplungskomponenten bedeutet, falls Z Stickstoff ist: 1-oder 2-Naphthol gegebenenfalls substituiert mit einer Sulfogruppe, m-Phenylendiamin, Resorcin, p-Alkyl(C₁-Cₛ)-Phenol, 1-Phenyl-3-methyl-5-pyrazolon oder Acetessigsäureanilid, wobei die Phenylgruppe in den beiden letztgenannten Verbindungen durch C₁-C ₄-Alkyl, C₁-C₄-Alkoxy, Chlor oder Sulfo substituiert sein kann, oder, falls Z die CH-Gruppe ist, den Rest eines o-Hydroxybenzaldehyds oder o-Hydroxynaphthaldehyds,die durch Phenylazo oder Sulfophenylazo substituiert sein können,
Me Kobalt oder Chrom und
Ka^{⊕} ein Kation bedeutet.

Besonders geeignet sind Mischungen von Farbstoffen der Formel II, worin Z Stickstoff ist.

Unter diesen werden bevorzugt Mischungen verwendet, enthaltend
a) einen Farbstoff der Formel III 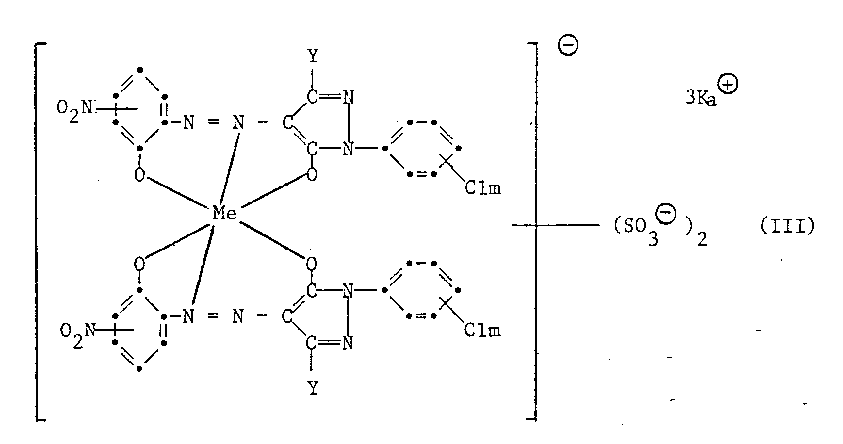 worin m eine ganze Zahl von 0-2, Me Kobalt oder Chrom, Ka⊕ ein Kation und Y Methyl, -CONH₂ oder - CO-NHR bedeutet, wobei R eine Alkylgruppe mit 1-4 C-Atomen darstellt,
b) einen Farbstoff der Formel IV 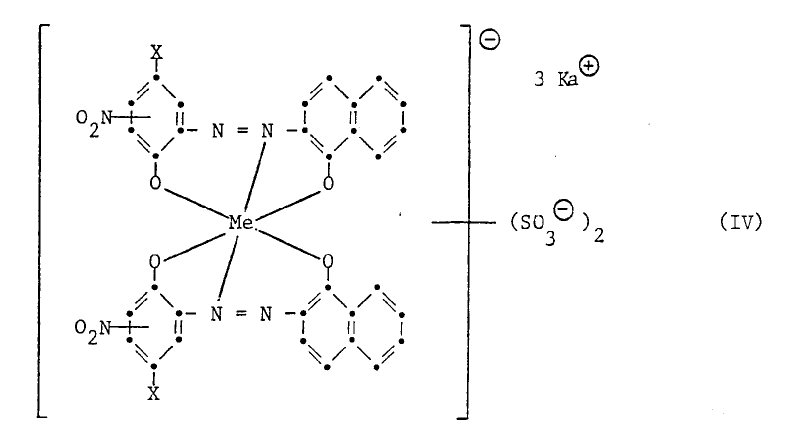 worin X Wasserstoff, Chlor, Methyl oder Methoxy, Me Kobalt oder Chrom und Ka⊕ ein Kation bedeutet, sowie
c) einen weiteren Farbstoff der oben angegebenen Formel III oder einen Farbstoff der Formel V 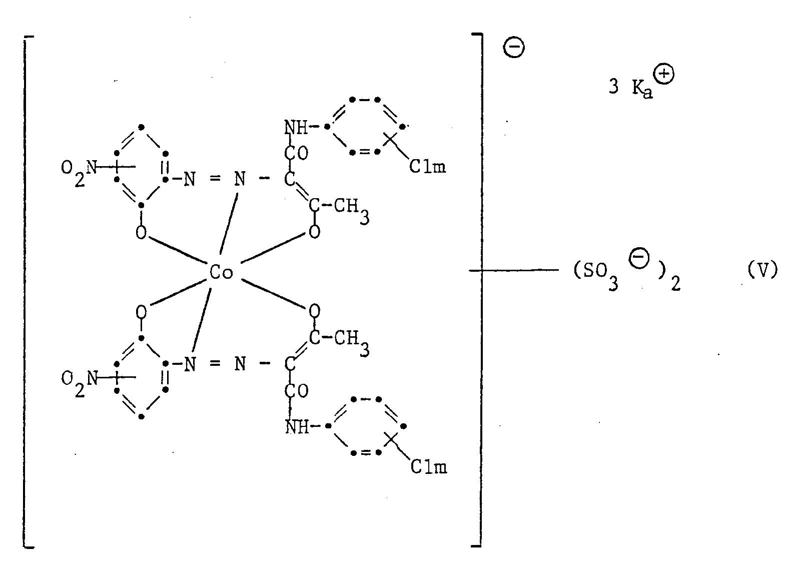 worin m eine ganze Zahl von 0-2 und Ka⊕ ein Kation bedeutet.

Ganz besonders bevorzugt sind Mischungen, welche mindestens einen der folgenden Farbstoffe enthalten:

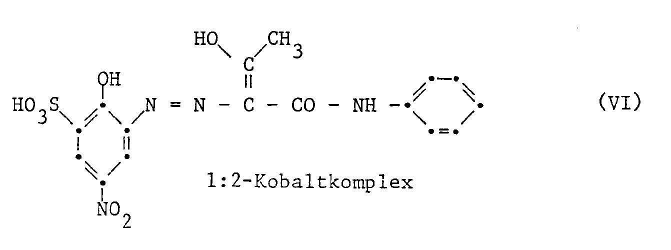

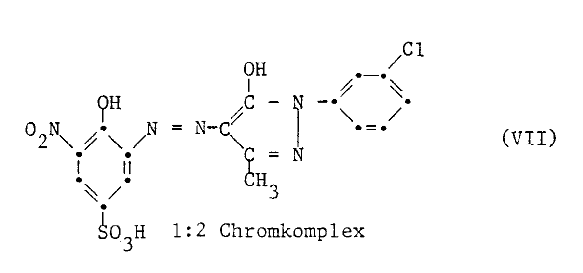

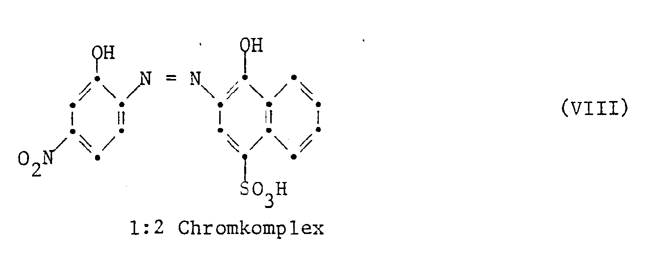

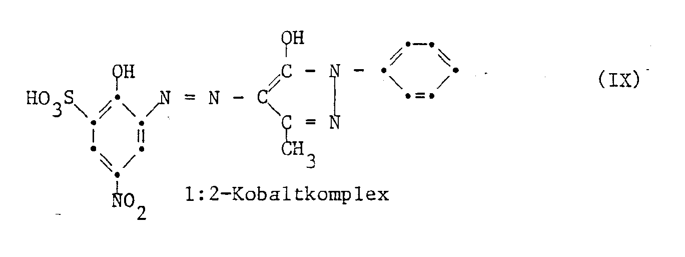

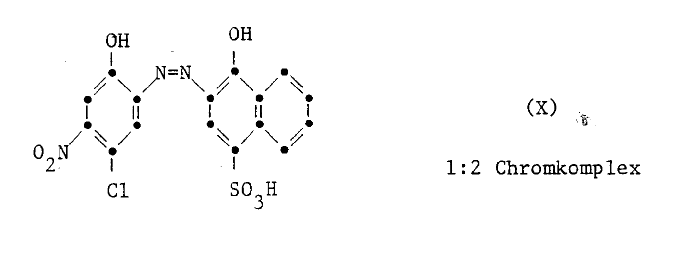

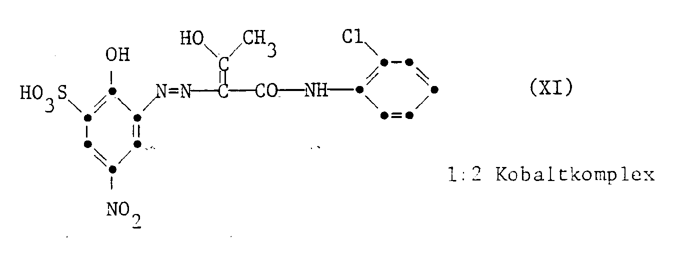

Die Mengen, in denen die erfindungsgemäss verwendbaren Farbstoffe in den Färbebädern eingesetzt werden, können je nach der gewünschten Farbtiefe in weiten Grenzen schwanken. Im allgemeinen sind Farbstoffmengen von 0,1 bis 10, vorzugsweise 0,5 bis 4 Gew.%, bezogen auf das Gewicht des zu färbenden Leders, vorteilhaft.

Neben Wasser und den Farbstoffen kann die Färbeflotte noch weitere Zusätze enthalten, z.B. Säuren, Basen oder Salze zur Einstellung des gewünschten pH-Wertes, sowie Hilfsmittel, wie z.B. Netzmittel, Fettungsmittel, farbvertiefende Hilfsmittel, Egalisierungsmittel und/oderAntischaummittel.

Das erfindungsgemässe Verfahren weist den grossen Vorteil auf, dass es nicht nurfüreinen bestimmten Ledertyp geeignet, sondern auf die verschiedensten Ledertypen anwendbar ist, beispielsweise auf Chromleder, nachgegerbtes Leder oder Verlourleder von Ziege, Rind oder Schwein.

Dank derfärberischen Ausgewogenheit der erfindungsgemäss verwendeten Farbstoffe kann nun auch für Leder von den interessanten Möglichkeiten der farbmetrischen Rezeptierung Gebrauch gemacht werden. Diese Methode, welche im textilen Bereich sehr verbreitet ist, erlaubt ein rationelles Färben jeder gewünschten Nuance. Vorlagen auf Textilmaterialien oder Leder lassen sich somit anhand der gespeicherten Daten berechnen und ohne zeitaufwendige Laboreinstellungen imitieren.

Das Färben erfolgt vorzugsweise nach dem Ausziehverfahren, z.B. bei einem Flottenverhältnis von 1:1,5 bis 1:20, vorzugsweise 1:2 bis 1:10, und bei Temperaturen von 20 bis 100° C, vorzugsweise 40 bis 60° C. Falls erwünscht oder erforderlich, kann das Leder einer Vorbehandlung unterworfen werden, beispielsweise einer Neutralisation oder Walke.

Die Färbedauer schwankt je nach Art des Leders und der gewünschten Farbtiefe, liegt im allgemeinen jedoch zwischen 45 und 180 Minuten. Im Anschluss an die Färbung wird das Leder gespült und wie üblich fertiggestellt.

Die folgenden Beispiele veranschaulichen die Erfindung, ohne sie darauf zu beschränken. Temperaturen sind in Grad Celsius angegeben und Prozente bedeuten Gewichtsprozente, bezogen auf das Gewicht des Leders.

Die angegebenen Farbstoffmengen beziehen sich auf uncoupierte Ware, wie sie nach üblichen in der Literatur beschriebenen Labor- und Betriebsverfahren erhalten werden.

### Beispiel 1:

100 Teile chromgares Bekleidungsvelourleder der Falzstärke 0,9 mm werden in einem gebräuchlichen mit 1000 Teilen Wasser und 2 Teilen Ammoniak 24%ig beschickten trommelförmigen Glasgefäss während 60 Minuten bei 50° aufgewalkt. Danach folgt ein Waschprozess von 15 Minuten Dauer in 1000 Teilen Wasser von 50°.

Nach diesen vorbereitenden Operationen wird das Leder in einer Flotte aus 1000 Teilen Wasser, 2 Teilen Ammoniak 24%ig, 0,48 Teilen des gelben Farbstoffes der Formel VI 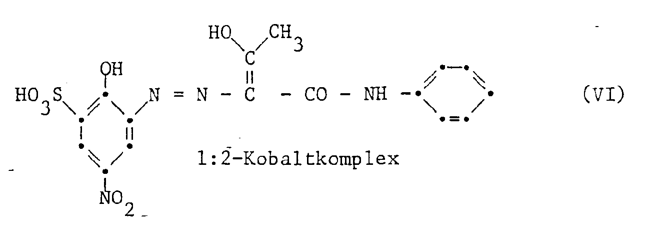 1,20 Teilen des roten Farbstoffes der Formel VII 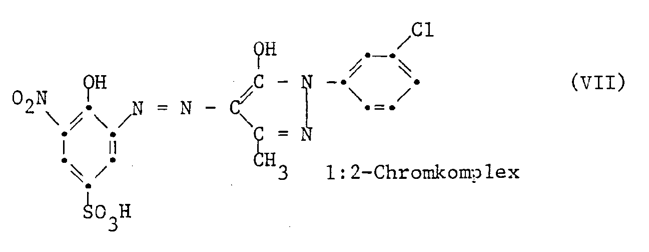 und 0,92 Teilen des blauen Farbstoffes der Formel VIII 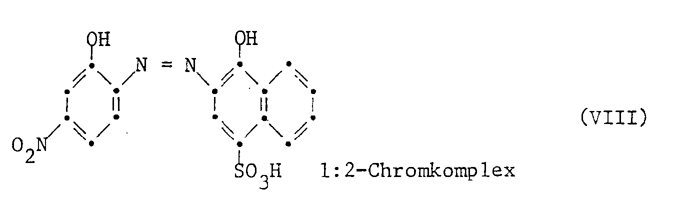 bei 50° gefärbt.

Nach einer Färbedauer von 60 Minuten wird mit 2 Teilen Ameisensäure 85%ig, verdünnt mit 20 Teilen Wasser, angesäuert und hierauf noch 20 Minuten weitergefärbt.

Die Fertigstellung des gefärbten Leders erfolgt nach gründlichem Spülen in frischem Wasser und gegebenenfalls einer Behandlung mit 2 Teilen eines Dicyandiaminoformaldehydkondensationsproduktes während 30 Minuten bei 50° in üblicher Weise.

Das erhaltene gefärbte Leder besitzt einen mittelbraunen Farbton. Es zeichnet sich durch gute Egalität und Echtheiten, insbesondere eine gute Lichtechtheit, aus.

### Beispiel 2:

Arbeitet man genau wie im Beispiel 1 beschrieben, verwendet jedoch anstelle der dort eingesetzten 0,48 Teile des gelben Farbstoffes der Formel VI 0,80 Teile des gelbbraunen Farbstoffes der Formel IX 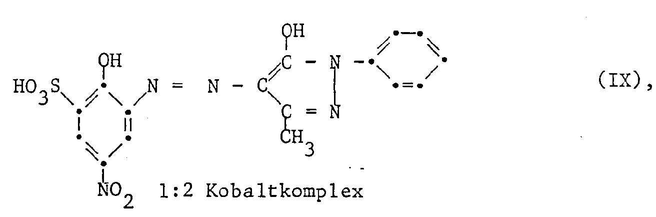 so erhält man rotbraun gefärbtes Leder. Die Färbung ist egal und weist gute Echtheiten auf.

### Beispiel 3:

100 Teile chromgegerbtes Rindleder der Falzstärke 1,4 mm werden in einer aus 200 Teilen Wasser, 1 Teil Natriumbicarbonat sowie 1 Teil Natriumformiat bestehenden Flotte während 45 Minuten bei 30° gewalkt und dann 2 mal mit 300 Teilen Wasser bei der gleichen Temperatur gewaschen.

Das solcherart neutralisierte Leder wird anschliessend mit 0,65 Teilen einer Farbstoffmischung, bestehend aus 0,12 Teilen des Farbstoffes der Formel VI (Eindringtiefe ca. 50 µm), 0,3 Teilen des Farbstoffes der Formel VII (Eindringtiefe ca. 70 µm) und 0,23 Teilen des Farbstoffes der Formel VIII (Eindringtiefe ca. 100 µm), in 300 Teilen Wasser bei 50° gefärbt. Nach 30 Minuten werden der Färbeflotte 3 Teile eines synthetischen Fettungsmittels (Gemisch aus Alkylbenzolen, aliphatischen Kohlenwasserstoffen, Alkansulfonsäuren und Tensiden) und nach weiteren 30 Minuten 0,5 Teile Ameisensäure 85%ig, verdünnt mit 5 Teilen Wasser, zugesetzt. Danach wird noch 20 Minuten bei 50° weiterbehandelt.

Nach gutem Spülen in kaltem Wasser und Fertigstellung in üblicher Weise resultiert ein egal mittelbraungefärbtes Leder mit ausgezeichneten Echtheiten, insbesondere einer guten Diffusionsechtheit gegen Weich-PVC. Der Farbton stimmt mit der nach Beispiel 1 erhaltenen Ausfärbung überein.

### Beispiel 4:

Arbeitet man wie im Beispiel 3 beschrieben, verwendet jedoch anstelle der dort eingesetzten Farbstoffmischung 1,04 Teile einer Farbstoffmischung, bestehend aus 0,54 Teilen des Farbstoffes der Formel IX,(Eindringtiefe ca. 80 µm), 0,34 Teilen des Farbstoffes der Formel VII und 0,16 Teilen des Farbstoffes der Formel VIII, so erhält man gelbstichig mittelbraun gefärbtes Leder.

### Beispiel 5:

100 Teile Chromrindleder werden nach den Angaben im Beispiel 3 neutralisiert und dann bei 50° in einer Flotte, bestehend aus 300 Teilen Wasser, 5 Teilen eines synthetischen Nachgerbstoffes (Kondensationsprodukte von Sulfosäuren, Sulfonen und Polysulfonen mit Formaldehyd und Harnstoff), sowie 2,08 Teilen der im Beispiel 4 eingesetzten Farbstoffmischung, gefärbt. Nach einer Färbedauer von 30 Minuten erfolgt ein Zusatz von 3 Teilen des synthetischen Fettungsmittels aus Beispiel 3 und nach weiteren 30 Minuten eine Zugabe von 1 Teil Ameisensäure 85%ig, verdünnt in 10 Teilen Wasser. Nach dem Ansäuern wird die Behandlung noch 20 Minuten bei 50° fortgesetzt. Anschliessend wird in kaltem Wasser gespült und wie üblich fertiggestellt.

Die erhaltene gelbstichig mittelbraune Färbung zeichnet sich durch gute Echtheitseigenschaften, vor allem durch eine bemerkenswerte Lichtechtheit,aus. Ausserdem stimmt sie im Farbton weitgehend mit der nach Beispiel 4 auf nicht nachgegerbtem Chromrindleder mit der gleichen Trichromie erhaltenen Ausfärbung überein.

### Beispiel 6:

Arbeitet man wie im Beispiel 5 beschrieben, verwendet jedoch anstelle der dort eingesetzten Farbstoffmischung 1,3 Teile der im Beispiel 3 eingesetzten Farbstoffmischung, so erhält man eine Färbung, die im Farbton ebenfalls mit der auf nicht nachgegerbtem Chromrindleder nach Beispiel 3 erhaltenen Ausfärbung übereinstimmt.

### Beispiel 7:

100 Teile neutralisiertes Chromkalblederwerden in einer Flotte, enthaltend 200 Teile Wasser, 0,18 Teile des Farbstoffes der Formel VI, 0,10 Teile des Farbstoffes der Formel VII und 0,11 Teile des Farbstoffes der Formel VIII während 30 Minuten bei 50° gefärbt. Dann wird mit 0,25 Teilen Ameisensäure 85%ig, verdünnt mit 2,5 Teilen Wasser, angesäuert und 20 Minuten weiterbehandelt. Hierauf folgt ein Zusatz von 1 Teil eines farbvertiefenden Hilfsmittels (ethoxyliertes Alkylamin). Nach einer weiteren Behandlungsdauer von 20 Minuten wird dem Färbebad nochmals die gleiche Menge der obengenannten Farbstoffe zugesetzt und danach 15 Minuten bei 50° weitergefärbt. Dann erfolgt nochmals ein Zusatz von 0,25 Teilen Ameisensäure 85%ig. Nach weiteren 20 Minuten ist die Färbung beendet. Es wird dann in kaltem Wasser gespült und anschliessend in frischer Flotte mit 3 Teilen des synthetischen Fettungsmittels aus Beispiel 3 in 400 Teilen Wasser während 60 Minuten bei 50° gefettet.

Die wie üblich fertiggestellte Färbung zeichnet sich durch hervorragende Echtheiten und einen vollen, dunkelbraunen Farbton aus. Sie ist wesentlich dunkler als eine entsprechende Färbung ohne das farbvertiefende Hilfsmittel. Gleiche Ergebnisse erhält man auch mit den anderen Farbstoffmischungen.

### Beispiel 8:

100 Teile Schweinsvelourleder werden bei 50° in einer aus 1000 Teilen Wasser, 1 Teil eines nichtionogenen Netzmittels (Gemisch aus ethoxylierten Fettalkoholen und Alkylphenolen) sowie 2 Teilen Ammoniak 24%ig bestehenden Flotte während 60 Minuten aufgewalkt. Anschliessend wird 15 Minuten in 1000 Teilen Wasser von 50° gewaschen.

Das auf diese Weise vorbehandelte Lederwird hierauf in einem frischen Bad aus 1000 Teilen Wasser und 1. Teil Ammoniak 24%ig während 5 Minuten bei 50° vorlaufen gelassen. Dann werden dieser Flotte 5 Teile des synthetischen Nachgerbstoffes aus Beispiel 5 und 10 Minuten später 2,70 Teile der Farbstoffmischung, bestehend aus 0,84 Teilen des Farbstoffes der Formel IX, 0,18 Teilen des Farbstoffes der Formel VII und 1,68 Teilen des Farbstoffes der Formel VIII sowie 1 Teil eines Färbereihilfsmittels (ethoxylierte Amine) zugesetzt. Nach einer Färbedauer von 60 Minuten bei 50° wird bei gleicher Temperatur und im selben Bad nach Zusatz von 6 Teilen eines aus sulfitiertem Tran bestehenden Fettungsmittels während 40 Minuten gefettet. Abschliessend wird noch mit4 Teilen Ameisensäure 85%ig, verdünnt mit40 Teilen Wasser, angesäuert und 30 Minuten bei 50° weiterlaufen gelassen. Dann wird das gefärbte Leder in kaltem Wasser gespült und wie üblich fertiggestellt. Es resultiert eine graue Färbung mit guter Egalität und Tongleichheit zwischen Narben- und Fleischseite.

### Beispiel 9:

100 Teile einer nicht zwischengetrockneten, chromgaren Bullenhaut der Falzstärke 1,1 mm werden in 300 Teilen Wasser, in Gegenwart von 0,3 Teilen eines Sequestrierungsmittels (Ethylendiamintetraacetat) während 15 Minuten bei 30° vorbehandelt.

Hierauf folgt eine 90 Minuten dauernde Nachgerbung mit 5 Teilen eines chromhaltigen synthetischen Gerbstoffes in 100 Teilen Wasser bei 50°. Anschliessend wird 10 Minuten in 500 Teilen Wasser von 30° gewaschen.

Das nachgegerbte Leder wird dann bei 30° in einer Lösung aus 300 Teilen Wasser und 1,5 Teilen Natriumformiat während 10 Minuten und nach Zusatz von 2,5 Teilen Natriumbicarbonat nochmals 80 Minuten lang neutralisiert. Danach wird 5 Minuten in 500 Teilen Wasser von 40° nachgewaschen.

Das derart nachgegerbte und neutralisierte Möbelleder wird anschliessend während 20 Minuten bei 30° in einer aus 100 Teilen Wasser, 2 Teilen Ammoniak 24%ig und 3 Teilen eines Egalisiermittels (Mischung eines sulfonierten Sulfongemisches aus Phenol und Rohkresol mit Leim) bereiteten Flotte vorlaufen gelassen. Dann werden 1,32 Teile der Farbstoffmischung, bestehend aus 0,86 Teilen des Farbstoffes der Formel VI, 0,20 Teilen des Farbstoffes der Formel VII und 0,26 Teilen des Farbstoffes der Formel VIII, zugegeben. Nach der Färbedauer von 30 Minuten wird noch ein Fettungsmittelgemisch, bestehend aus 4 Teilen des Fettungsmittels aus Beispiel 3 und 2 Teilen sulfiertem Tran, hinzugefügt und bis zur Durchfärbung weitergefärbt, was nach 60 Minuten der Fall ist. Hierauf wird mit 200 Teilen Wasser von 70° verdünnt und nach 15 Minuten mit 1,5 Teilen Ameisensäure 85%ig, vermischt mit 15 Teilen Wasser, angesäuert (pH 4,0) und 30 Minuten weiterlaufen gelassen.

Anschliessend wird in einem frischen Bad noch mit 0,66 Teilen der oben eingesetzten Farbstoffmischung in 300 Teilen Wasser während 20 Minuten bei 50° nachgedeckt. Dann werden dem Färbebad wiederum 6 Teile des vorstehend genannten Fettungsmittelgemisches und nach weiteren 40 Minuten noch 0,5 Teile Ameisensäure 85%ig, verdünnt mit 5 Teilen Wasser, zugesetzt. Nach einer abschliessenden Behandlungsdauer von 30 Minuten bei pH 3,8 wird gespült und wie üblich fertiggestellt.

Das gleichmässig durchgefärbte Möbelleder hat einen olivebraunen Farbton.

### Beispiel 10:

100 Teile chromgegerbtes Rindleder werden wie im Beispiel 3 beschrieben vorbehandelt und danach in 6 gleiche Abschnitte zerteilt.

Man färbt diese Abschnitte nacheinander jeweils 10 Minuten bei 50° in einer Flotte, welche je 0,1 Teile der Farbstoffe der Formeln VII, VIII und IX in 150 Teilen Wasser enthält. Die einzelnen Abschnitte werden dann gespült und getrocknet und auf ihre Farbtondifferenz visuell oder mittels Remissionsmessungen geprüft.

Die 6 Abschnitte sind jeweils braun gefärbt (in abnehmender Farbtiefe) und weisen keinen nennenswerten Unterschied im Farbton auf.

### Beispiel 11:

Arbeitet man wie im Beispiel 10 beschrieben, verwendet jedoch eine Flotte, welche die gleiche Menge der Farbstoffe der Formel VII und IX enthält, aber anstelle des im Beispiel 10 verwendeten blauen Farbstoffes die gleiche Menge des blauen Farbstoffes der Formel XII (Eindringtiefe ca. 15 f..lm) 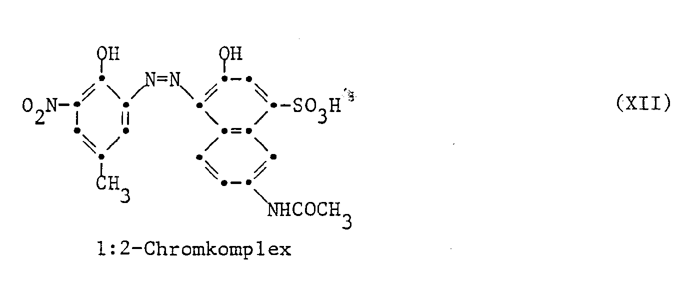 so erhält man 6 Abschnitte, welche sich im Farbton deutlich unterscheiden. Die beiden zuerst gefärbten Abschnitte sind blaustichig braun, die beiden zuletzt gefärbten Abschnitte dagegen orange gefärbt.

### Beispiel 12:

100 Teile eines auf übliche Weise chromgegerbten, geschliffenen und mit einem chromhaltigen synthetischen Gerbstoff nachgegerbten, neutralisierten Wollschaffells werden zwecks besserer Anfärbbarkeit der Wollhaare in einer aus 2000 Teilen Wasser, 2 Teilen Ammoniak 24% ig, 3 Teilen calcinierter Soda und 1 Teil eines nichtionogenen Netzmittels auf Basis von Ethylenoxid-Addukten zubereiteten Flotte während 1 Stunde bei 40° vorbehandelt. Hierauf wird gut gespült und dann geschleudert.

Das derart vorbereitete Schaffell wird nun in einer frischen Flotte, bestehend aus 2000 Teilen Wasser, 2 Teilen eines farbvertiefenden Carriers (Gemisch von Estern und nicht-ionischen Emulgatoren), 1 Teil eines Netzmittels auf Basis von Ethylenoxid-Addukten, 1 Teil eines Naphthalinsulfonsäure-Kondensationsproduktes und 1 Teil eines Egalisiermittels ( ethoxylierte Amine), 10 Minuten bei 60° vorlaufen gelassen (pH 6,5). Nun werden 2,8 Teile der Farbstoffmischung, zusammengesetzt aus 1,68 Teilen des Farbstoffes der Formel IX, 0,56 Teilen des Farbstoffes der Formel VII und 0,56 Teilen des Farbstoffes der Formel VIII hinzugefügt. Nach einer Färbedauer von 45 Minuten bei 60° erfolgt ein Zusatz von 8 Teilen eines Fettungsmittelgemisches, das aus 4 Teilen eines emulgatorhaltigen Gemisches aus partiell sulfiertem Chlorparaffin und natürlichen Fettstoffen sowie 4 Teilen eines sulfitierten Tranes besteht. Nach weiteren 15 Minuten wird mit 2 Teilen Ameisensäure 85% ig, verdünnt mit 20 Teilen Wasser, angesäuert (pH 3,7) und hierauf die Behandlung 45 Minuten fortgesetzt. Dann wird gut gespült und wie üblich fertiggestellt.

Man erhält eine gelbstichige Braunfärbung, wobei die Wolle und die Lederseite Ton-in-Ton angefärbt sind.

### Beispiel 13:

100 Teile Chromspaltverlours-Leder werden in 1000 Teilen Wasser und 2 Teilen Ammoniak 24%ig 60 Minuten lang bei 50° aufgewalkt und anschliessend mit 1000 Teilen Wasser von 50° während 15 Minuten gewaschen.

Das derart vorbereitete Leder wird nun in einer frischen aus 1000 Teilen Wasser, 2 Teilen Ammoniak 24%ig, 2,0 Teilen des gelben Farbstoffes der Formel VI, 0,24 Teilen des roten Farbstoffes der Formel VII und 1,6 Teilen des blauen Farbstoffes der Formel X bereiteten Flotte bei 50° gefärbt. Nach 60 Minuten fügt man noch 2 Teile Ameisensäure 85%, verdünnt mit 20 Teilen Wasser, hinzu und färbt weitere 20 Minuten bei dieser Temperatur.

Das gefärbte Lederwird in kaltem Wasser gespült und wie üblich fertiggestellt. Man erhält eine olivebraune Färbung, die sich durch gute Echtheiten und Nuancengleichheit zwischen Velours- und Fleischseite auszeichnet.

### Beispiel 14:

Wenn man genau wie im Beispiel 13 verfährt, aber anstelle von 2,0 Teilen des gelben Farbstoffes der Formel VI 1,2 Teile des gelben Farbstoffes der Formel XI verwendet, so erhälts man eine gleichwertige Färbung.

### Beispiel 15:

Eine mittelbraune Vorlage unbekannter Zusammensetzung auf Polyamid wurde farbmetrisch ausgemessen (Hue = 18,6, Chroma = 29,8 und Value = 33,3) und in der Folge nach der durch den Computer berechneten Rezeptur mit 0,30 Teilen des gelben Farbstoffes der Formel VI, 0,438 Teilen des roten Farbstoffes der Formel VII und 0,092 Teilen des blauen Farbstoffes der Formel X 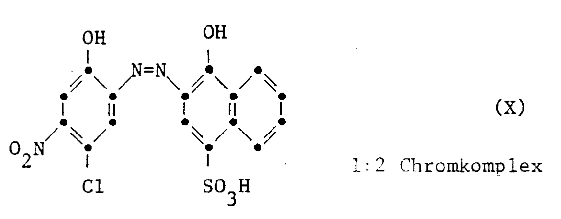 analog den im Beispiel 3 erwähnten Färbebedingungen auf 100 Teilen neutralisiertem Chromkalbleder imitiert. Diese Lederfärbung (Hue = 18,2, Chroma = 27,9 und Value 34,0) zeichnet sich durch eine sehr gute Uebereinstimmung mit der Vorlage auf Polyamid aus.

## Patentansprüche

1. Verfahren zum Trichromiefärben von Leder mit Farbstoffmischungen, dadurch gekennzeichnet, dass man drei unabhängig voneinander hergestellte Farbstoffe der Nuancen Gelb, Rot und Blau, die jeweils keinen faserreaktiven Rest aufweisen und einem symmetrischen 1:2-Komplex der Formel 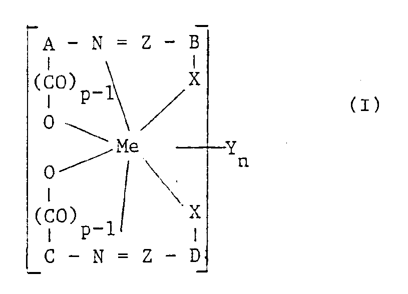 entsprechen, worin
Z Stickstoff oder eine CH-Gruppe,
A und C identische Reste der Benzol- oder Naphthalinreihe, welche in o-Stellung zur Azo- oder Azomethingruppe eine Hydroxy- oder Carboxygruppe enthalten,
B und D identische Reste einer Kupplungskomponente, wenn Z Stickstoff ist, wobei die Kupplungskomponente in o- bzw. -Stellung zur Azogruppe die Gruppe X enthält, oder identische Reste eines o-Hydroxyaldehyds, wenn Z die CH-Gruppe darstellt,
X Sauerstoff oder eine Gruppe der Formel -NR-, worin R Wasserstoff oder eine C₁-C₄-Alkylgruppe darstellt,
Me Chrom oder Kobalt,
Y die S0₃H-Gruppe,
p 1 oder 2, und
n die Zahl 2 bedeutet,
und worin die Farbstoffe
a) keine oder nur eine geringe Neigung zur Aggregation in elektrolythaltiger, wässriger Lösung zeigen und
b) auf Standard-Chromleder eine Eindringtiefe zwischen 20 und 200 µm aufweisen, wobei die Unterschiede in der Eindringtiefe der einzelnen Farbstoffe des Gemisches innerhalb eines Bereichs von 50 µm liegen,
in einem beliebigen Mengenverhältnis mischt und mit dieser Farbstoffmischung das Leder in wässriger Flotte färbt.

2. Verfahren gemäss Anspruch 1, dadurch gekennzeichnet, dass man als Farbstoffe solche verwendet, welche ein ähnliches Aufziehverhalten aufweisen.

3. Verfahren gemäss Anspruch 1, dadurch gekennzeichnet, dass man eine Mischung von Farbstoffen der Formel I verwendet, worin X Sauerstoff bedeutet.

4. Verfahren gemäss Ansprüchen 1 bis 3, dadurch gekennzeichnet, dass man eine Mischung von Farbstoffen der Formel I verwendet, worin p gleich 1 ist.

5. Verfahren gemäss Ansprüchen 1 bis 4, dadurch gekennzeichnet, dass man eine Mischung von Farbstoffen der Formel verwendet, worin die einzelnen Farbstoffe jeweils 24 bis 40 C-Atome, vorzugsweise 28 bis 36 C-Atome, insbesondere 32 C-Atome aufweisen.

6. Verfahren gemäss Ansprüchen 1 bis 5, dadurch gekennzeichnet, dass man eine Mischung von 1:2-Metallkomplexen der Formel I verwendet, deren Molekulargewicht zwischen 800 und 1000 liegt (als freie Säure berechnet).

7. Verfahren gemäss Ansprüchen 1 bis 6, dadurch gekennzeichnet, dass man eine Mischung von Farbstoffen der Formel verwendet, worin A und C jeweils den Rest eines 1-Hydroxy-2-aminobenzols darstellen, welcher gegebenenfalls ein- oder mehrmals durch gleiche oder verschiedene Substituenten aus der Reihe Nitro, Sulfo, Chlor, Methyl oder Methoxy substituiert ist.

8. Verfahren gemäss Anspruch 7, dadurch gekennzeichnet, dass man eine Mischung von Farbstoffen der Formel verwendet, worin A und C jeweils den Rest eines 1-Hydroxy-2-aminobenzols bedeuten, der in 4- oder 5-Stellung eine Nitrogruppe trägt, oder den Rest eines 1-Hydroxy-2-aminobenzols, der in 4-Stellung eine Nitrogruppe und in 6-Stellung eine Sulfogruppe trägt oder den Rest eines 1-Hydroxy-2-aminobenzols, der in 4-Stellung eine Sulfogruppe und in 6-Stellung eine Nitrogruppe trägt.

9. Verfahren gemäss Ansprüchen 1 bis 8, dadurch gekennzeichnet, dass man eine Mischung von Farbstoffen der Formel verwendet, worin B und Djeweils den Rest einer der folgenden Kupplungskomponenten bedeutet:
gegebenenfalls durch niedermolekulares Alkyl oder Alkoxy, Amino oder Acylamino substituiertes in o-Stellung kuppelndes Phenol, Resorcin, m-Phenylendiamin, gegebenenfalls in 4-Stellung substituiert durch Sulfo, Chlor, Methyl oder Methoxy, Naphthole, die gegebenenfalls mit C₁-C₄-Alkyl oder Alkoxy, Chlor, Amino, Acylamino oder Sulfo substituiert sind, 5-Pyrazolone oder 5-Aminopyrazole, die in 1-Stellung einen gegebenenfalls mit Chlor, Nitro, C₁-C₄-Alkyl- oder Alkoxygruppen oder Sulfogruppen substituierten Phenyl- oder Naphthylrest besitzen und in 3-Stellung eine C₁-C₄-Alkylgruppe, insbesondere eine Methylgruppe, aufweisen,
Acetessigsäureamide, Acetessigsäureanilide und Benzoylessigsäureanilide, die im Anilidkern gegebenenfalls mit Chlor, C₁-C₄-Alkyl-oder Alkoxy- oder Sulfogruppen substituiert sein können, oder6-Hydroxy-3-cyano- oder 6-Hydroxy-3-carbonamido-4-alkyl-2-pyridone, die in 1-Stellung durch gegebenenfalls substituiertes C₁-C₄-Alkyl, z.B. Methyl, Isopropyl, β-Hydroxyäthyl, β-Aminoäthyl oder y-Isopropoxypropyl oder durch Phenyl substituiert sind, und in 4-Stellung eine C₁-C₄ -Alkylgruppe, insbesondere Methyl, tragen können.

10. Verfahren gemäss Anspruch 9, dadurch gekennzeichnet, dass man eine Mischung von Farbstoffen der Formel verwendet, worin B und D jeweils den Rest einer der folgenden Kupplungskomponenten bedeutet: 1- oder 2-Naphthol, gegebenenfalls substituiert mit einer Sulfogruppe, m-Phenylendiamin, Resorcin, p-Alkyl(C₁-C₆)-Phenol, 1-Phenyl-3-methyl-5-pyrazolon oder Acetessigsäureanilid, wobei die Phenylgruppe in den beiden letztgenannten Verbindungen durch C₁-C₄-Alkyl, C₁-C₄-Alkoxy, Chlor oder Sulfo substituiert sein kann.

11. Verfahren gemäss Anspruch 1, dadurch gekennzeichnet, dass man eine Mischung von Farbstoffen verwendet, welche der Formel II 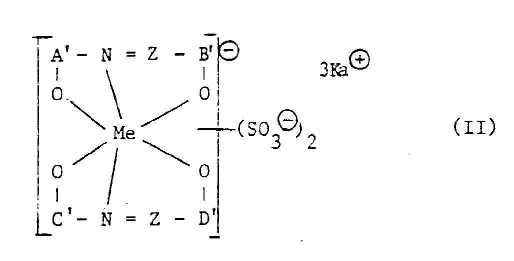 entsprechen, worin
Z Stickstoff oder eine CH-Gruppe,
A' und C' jeweils den Rest eines 1-Hydroxy-2-aminobenzols bedeuten, der in 4- oder 5-Stellung eine Nitrogruppe trägt, oder den Rest eines 1-Hydroxy-2-aminobenzols, der in 4-Stellung eine Nitrogruppe und in 6-Stellung eine Sulfogruppe trägt oder den Rest eines 1-Hydroxy-2-aminobenzols, der in 6-Stellung eine Nitrogruppe trägt und in 4-Stellung eine Sulfogruppe,
B' und D' jeweils den Rest einer der folgenden Kupplungskomponenten bedeutet, falls Z Stickstoff ist, 1- oder 2-Naphthol gegebenenfalls substituiert mit einer Sulfogruppe, m-Phenylendiamin, Resorcin, p-Alkyl(C ₁-C₆)-Phenol, 1-Phenyl-3-methyl-5-pyrazolon oder Acetessigsäureanilid, wobei die Phenylgruppe in den beiden letztgenannten Verbindungen durch C₁-C₄-Alkyl, C₁-C₄-Alkoxy, Chlor oder Sulfo substituiert sein kann, oder, falls Z die CH-Gruppe ist, den Rest eines o-Hydroxybenzaldehyds oder o-Hydroxynaphthaldehyds,die durch Phenylazo oder Sulfophenylazo substituiert sein können,
Me Kobalt oder Chrom und
Ka⊕ ein Kation bedeutet.

12. Verfahren gemäss Anspruch 11, dadurch gekennzeichnet, dass man eine Mischung von Farbstoffen verwendet, enthaltend
a) einen Farbstoff der Formel III 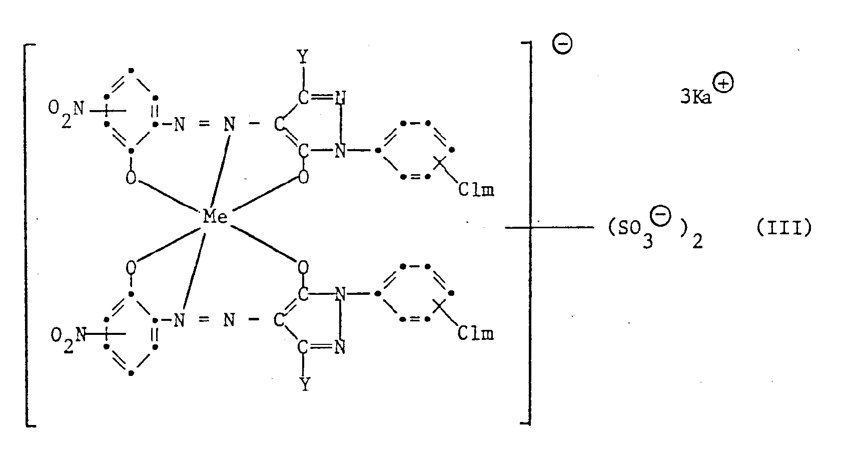 worin m eine ganze Zahl von 0 bis 2, Me Kobalt oder Chrom , Ka⊕ ein Kation und Y Methyl, -CONH₂ oder -CONHR bedeutet, wobei R eine Alkylgruppe mit 1 bis 4 C-Atomen darstellt,
b) einen Farbstoff der Formel IV 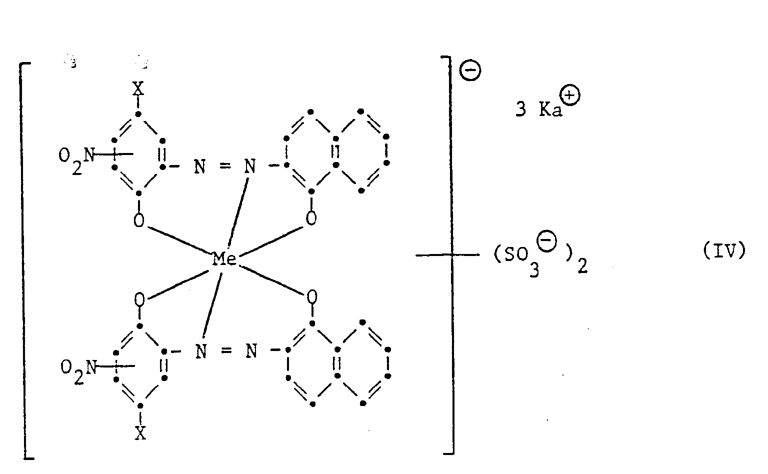 worin X Wasserstoff, Chlor, Methyl oder Methoxy, Me Kobalt oder Chrom, Ka⊕ ein Kation bedeutet, sowie
c) einen weiteren Farbstoff der oben angegebenen Formel III oder einen Farbstoff der Formel V 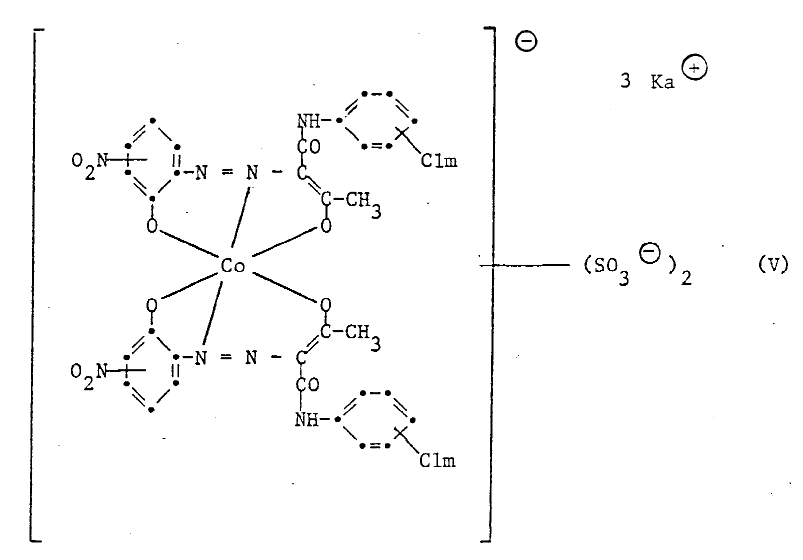 worin m eine ganze Zahl von 0-2 und Ka⊕ ein Kation bedeutet.

13. Verfahren gemäss Anspruch 12, dadurch gekennzeichnet, dass man eine Mischung von Farbstoffen verwendet, welche mindestens einen der folgenden Farbstoffe enthält:

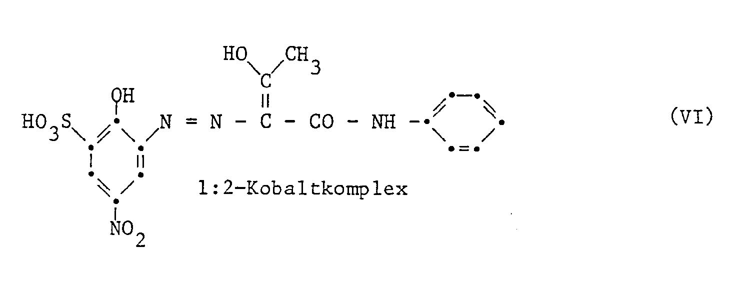

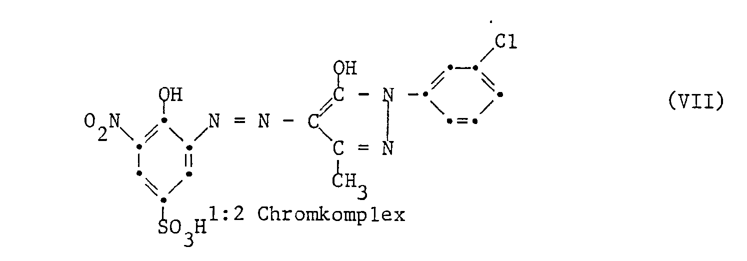

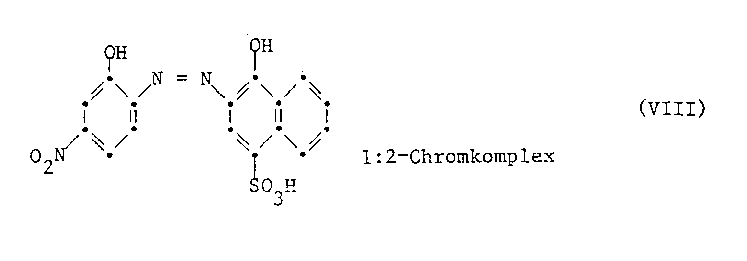

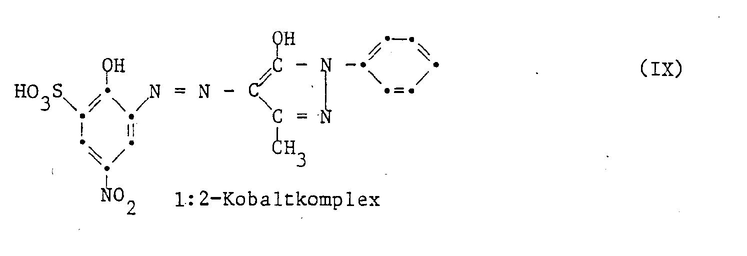

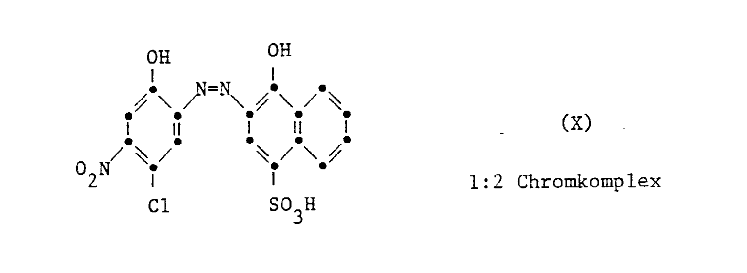

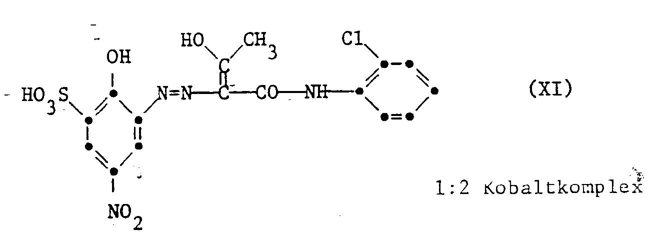

14. Verfahren gemäss Ansprüchen 1 bis 13, dadurch gekennzeichnet, dass man eine Färbeflotte verwendet, welche zusätzlich ein farbvertiefendes Hilfsmittel enthält.

15. Verfahren gemäss Anspruch 14, dadurch gekennzeichnet, dass man eine Färbeflotte verwendet, welche als farbvertiefendes Hilfsmittel ein ethoxyliertes Alkylamin enthält.

16. Die nach dem Verfahren gemäss den Ansprüchen 1 bis 15 gefärbten Leder.

## Claims

1. A process for the trichromatic dyeing of leather with mixtures of dyes, which comprises mixing in any desired proportion three independently prepared dyes of the hues yellow, red and blue, none of which contains a fibre-reactive radical and each of which corresponds to a symmetrical 1:2 complex of the formula I 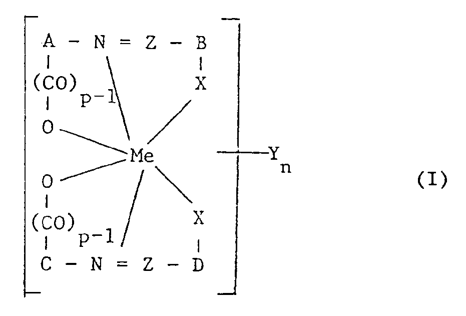 in which each Z is independently of the other nitrogen or a CH group, A and C are identical radicals of the benzene or naphthalene series containing a hydroxyl or carboxyl group in the o-position relative to the azo or azomethine group, B and D are identical radicals of a coupling component when Z is nitrogen, said coupling component containing the group X in the o-position or a-position relative to the azo group, or are identical radicals of an o-hydroxyaldehyde when Z is a CH group, each X is independently of the other oxygen or a group of the formula-NR-, in which R is hydrogen or a a C₁-C₄alkyl group, Me is chromium or cobalt, Y is an SO₃H group, p is 1 or 2 and n is 2, and in which the dyes
a) exhibit minimial, if any, propensity to aggregate in an aqueous solution containing electrolytes, and
b) penetrate into standard chrome leather to a depth between 20 and 200 µm, the differences in the depth of penetration between the individual dyes of the mixture being within a range of 50 µm, and using this mixture of dyes to dye the leather in an aqueous liquor.

2. A process according to claim 1, wherein the dyes used have similar exhaustion characteristics.

3. A process according to claim 1, wherein X is oxygen.

4. A process according to any one of claims 1 to 3, wherein p is 1.

5. A process according to any one of claims 1 to 4, wherein the dyes of the formula each contain 24 to 40 carbon atoms, preferably 28 to 36 carbon atoms, in particular 32 carbon atoms.

6. A process according to any one of claims 1 to 5, wherein the 1:2 metal complexes of the formula I each have a molecular weight between 800 and 1000 (calculated as free acid).

7. A process according to any one of claims 1 to 6, wherein A and C are each a radical of a 1-hydroxy-2-aminobenzene which is unsubstituted or substituted by one or more identical or different substituents selected from the group consisting of nitro, sulfo, chlorine, methyl and methoxy.

8. A process according to claim 7, wherein Aand C are each a radical of a 1-hydroxy-2-aminobenzene which carries a nitro group in the 4- or 5-position, or a radical of a 1-hydroxy-2-aminobenzene which carries a nitro group in the 4-position and a sulfo group in the 6-position, or a radical of a 1-hydroxy-2-aminobenzene which carries a sulfo group in the 4-position and a nitro group in the 6-position.

9. A process according to any one of claims 1 to 8, wherein B and D are each a radical of one of the following coupling components: phenol which couples in the ortho-position and which is unsubstituted or substituted by lower alkyl oralkoxy, amino or acylamino; resorcinol or m-phenylenediamine, each unsubstituted or substituted in the 4-position by sulfo, chlorine, methyl or methoxy; naphthols which are unsubstituted or substituted by C₁-C₄alkyl, alkoxy, chlorine, amino, acylamino or sulfo; 5-pyrazolones or 5-aminopyrazoles which have in the 1-position a phenyl or naphthyl radical which is unsubstituted or substituted by chlorine or nitro, C₁-C₄alkyl oralkoxy orsulfo groups, and which have in the 3-position a C₁-C₄alkyl group, in particular a methyl group; acetoacetamides; acetoacetanilides and benzoylacetanilides which may be substituted in the anilide nucleus by chlorine or C₁-C₄alkyl or alkoxy or sulfo groups; or 6-hydroxy-3-cyano-4-alkyl-2-pyridones or 6-hydroxy-3-carboxamido-4-alkyl-2-pyridones which are substituted in the 1- position by substituted or unsubstituted C₁-C₄alkyl, for example methyl, isopropyl, ß-hydroxyethyl, ß-aminoethyl or y-isopropoxypropyl, or by phenyl, and which may carry in the 4-position a C₁-C₄alkyl group, in particular methyl.

10. A process according to claim 9, wherein B and D are each a radical of one of the following coupling components: 1- or 2-naphthol which is unsubstituted or substituted by a sulfo group; m-phenylenediamine, resorcinol, P-(C₁-C₆)alkylphenol, 1-phenyl-3-methyl-5-pyrazolone or acetoacetanilide, in which both last- mentioned compounds the phenyl group may be substituted by C₁-C₄alkyl, C₁-C₄alkoxy, chlorine or sulfo.

11. A process according to claim 1, wherein the dyes used have the formula II 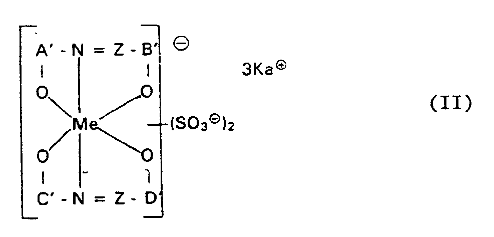 in which each Z is independently of the other nitrogen or a CH group, each of A and C' is a radical of a 1-hydroxy-2-aminobenzene which carries a nitro group in the 4- or 5-position, or a radical of a 1-hydroxy-2-aminobenzene which carries a nitro group in the 4-position and a sulfo group in the 6-position, or a radical of a 1-hydroxy-2-aminobenzene which carries a nitro group in the 6-position and a sulfo group in the 4-position, each of B' and D' is a radical of one of the following coupling components when Z is nitrogen: 1- or 2-naphthol which is unsubstituted or substituted by a sulfo group; m-phenylenediamine, resorcinol, p-(C₁-Cₛ)alkylphenol, 1-phenyl-3-methyl-5-pyrazolone or acetoacetanilide, in which both last- mentioned compounds the phenyl group may be substituted by C₁-C₄alkyl, C₁-C₄alkoxy, chlorine or sulfo, or, when Z is a CH group, each of B' and D' is a radical of an o-hydroxybenzaldehyde or o-hydroxynaph- thaldehyde which may be substituted by phenylazo or sulfophenylazo, Me is cobalt or chromium and Ka⊕ is a cation.

12. A process according to claim 11, wherein the mixture of dyes used contains
a) a dye of the formula III 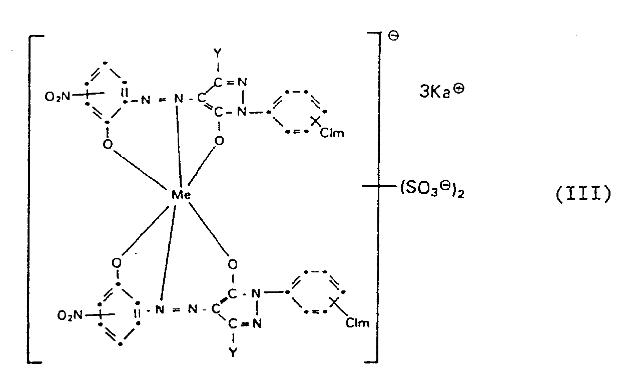 in which m is an integer from 0 to 2, Me is cobalt or chromium, Ka^{⊕} is a cation and Y is methyl, -CONH2 or -CONHR, R being an alkyl group containing 1 to 4 carbon atoms,
b) a dye of the formula IV 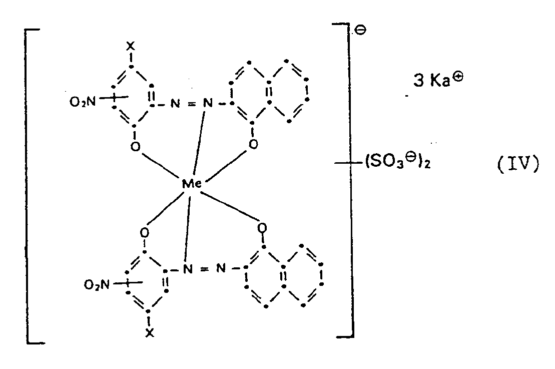 in which X is hydrogen, chlorine, methyl or methoxy, Me is cobalt or chromium and Ka^{⊕} is a cation, and
c) a further dye of the formula III indicated above or a dye of the formula V 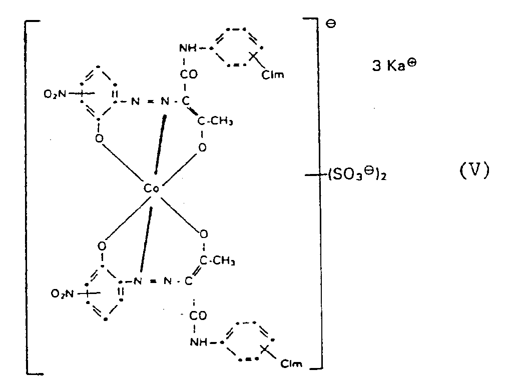 in which m is an integer from 0 to 2 and Ka^{®} is a cation.

13. A process according to claim 12, wherein the mixture of dyes used contains at least one of the following dyes:

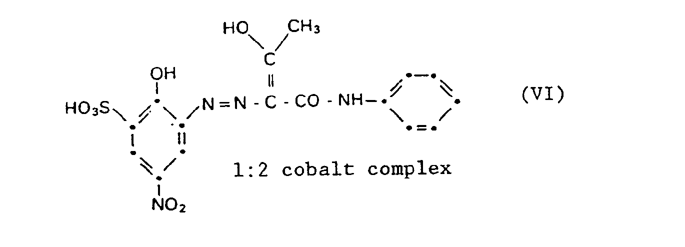

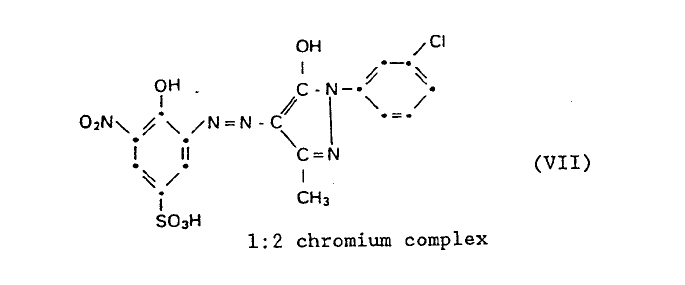

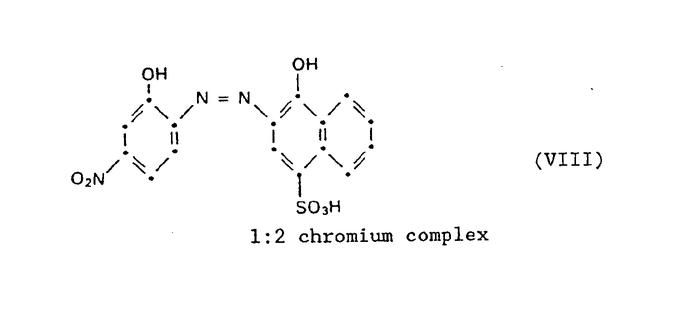

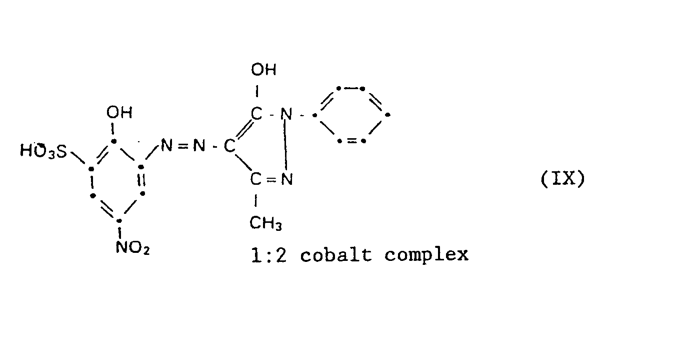

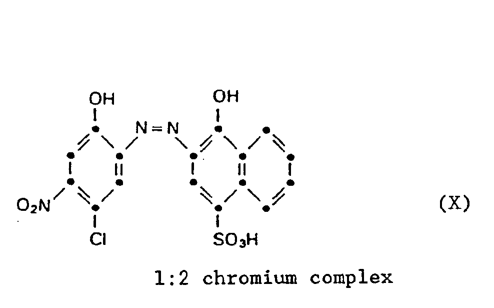

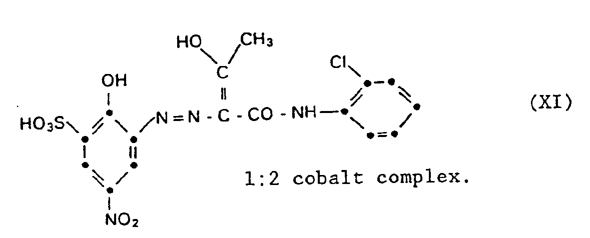

14. A process according to any one of claims 1 to 13, wherein the dye liquor additionally contains a colour intensifier.

15. A process according to claim 14, wherein the colour intensifier is an ethoxylated alkylamine.

16. Leather dyed by the process of any one of claims 1 to 15.

## Revendications

1. Procédé pour teindre le cuir en trichromie avec des mélanges de colorants, qui est caractérisé par le fait qu'on mélange, en des proportions quelconques, trois colorants préparés indépendamment les uns des autres, de couleurs jaune, rouge et bleue, qui ne comportent pas de groupe réactif vis-à-vis des fibres et qui correspondent à un complexe 1:2 symétrique de formule 1 : 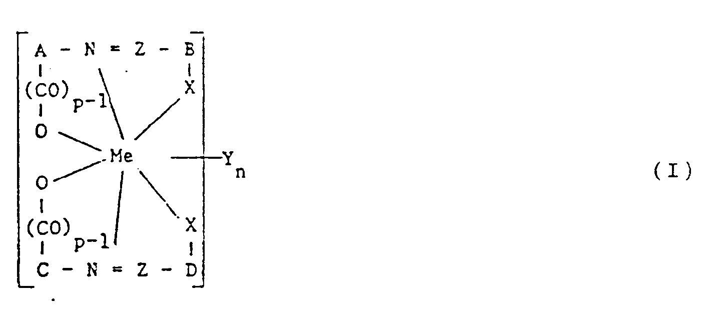 dans laquelle :
Z désigne un atome d'azote ou un groupe CH,
A et C sont des restes identiques de la série du benzène ou du naphtalène, qui contiennent en position ortho, par rapport au groupe azoïque ou azométhinique, un groupe hydroxyle ou carboxyle,
B et D sont des restes identiques d'un copulant, quand Z est un atome d'azote, ce copulant portant en position ortho ou alpha par rapport au groupe azoïque le groupe X, ou bien des restes identiques d'un o-hydroxyaldéhyde, quand Z représente le groupe CH,
X est un atome d'oxygène ou un groupe de formule -NR-, où R est un atome d'hydrogène ou bien représente un groupe alkyle en C1-C4,
Me est le chrome ou le cobalt,
Y est le groupe S03H,
p vaut 1 ou 2, et
n est le nombre 2,
et
a) ces colorants n'ayant que peu ou pas du tout tendance à s'agglomérer dans une solution aqueuse d'électrolyte, et
b) présentent, sur du cuir au chrome classique, une profondeur de pénétration comprise entre 20 et 200 µm, la différence dans la profondeur de pénétration de chaque colorant du mélange étant à l'intérieur d'une gamme de 50 µm,
et en ce qu'on teint le cuir en bain aqueux avec ce mélange de colorants.

2. Procédé selon la revendication 1, caractérisé par le fait qu'on utilise, comme colorants, des colorants présentant un pouvoir de fixation analogue.

3. Procédé selon la revendication 1, caractérisé par le fait qu'on utilise un mélange de colorants de formule I, dans lesquels X est un atome d'oxygène.

4. Procédé selon les revendications 1 à 3, caractérisé par le fait qu'on utilise un mélange de colorants de formule I dans lesquels p est égal à 1.

5. Procédé selon les revendications 1 à 4, caractérisé par le fait qu'on utilise un mélange de colorants de formule I dans lequel les divers colorants présentent à chaque fois 24 à 40 atomes de carbone, de préférence 28 à 36 atomes de carbone, en particulier 32 atomes de carbone.

6. Procédé selon les revendications 1 à 5, caractérisé par le fait qu'on utilise un mélange de complexes métalliques 1:2 de formule I dans lesquels le poids moléculaire est compris entre 800 et 1000 (calculé sous forme d'acide libre).

7. Procédé selon les revendications 1 à 6, caractérisé par le fait qu'on utilise un mélange de colorants de formule I dans lesquels A et C désignent chacun le reste d'un 1-hydroxy-2-aminobenzène qui est éventuellement substitué une ou plusieurs fois par des substituants identiques ou différents de la série nitro, sulfo, chloro, méthyle ou méthoxy.

8. Procédé selon la revendication 7, caractérisé par le fait qu'on utilise un mélange de colorants de formule 1 dans lesquels A et C désignent à chaque fois le reste d'un 1-hydroxy-2-aminobenzène qui porte sur la position 4 ou 5 un groupe nitro, ou bien le reste d'un 1-hydroxy-2-aminobenzène qui porte sur la position 4 un groupe nitro et sur la position 6 un groupe sulfo, ou bien le reste d'un 1-hydroxy-2-aminobenzène qui porte sur la position 4 un groupe sulfo et sur la position 6 un groupe nitro.

9. Procédé selon les revendications 1 à 8, caractérisé par le fait qu'on utilise un mélange de colorants de formule I dans lesquels B et D désignent chacun le reste d'un des copulants ci-après :
phénols couplés en position ortho éventuellement substitués par des radicaux alkyle ou alcoxy, amino ou acylamino, résorcine, m-phénylènediamine, éventuellement substituées sur la position 4 par des radicaux sulfo, chloro, méthyle ou méthoxy ; naphtols qui sont éventuellement substitués par des radicaux alkyle ou alcoxy en C₁-C₄, chloro, amino, acylamino ou sulfo 5-pyrazolones ou 5-aminopyrazoles qui possèdent sur la position 1 un groupe phényle ou naphtyle éventuellement substitué par des radicaux chloro, nitro, alkyle ou alcoxy en Cₗ-C₄ ou des radicaux sulfo, et qui présentent sur la position 3 un groupe alkyle en C₁-C₄, en particulier un groupe méthyle ;
acétoacétamides, acétoacétanilides et benzoylacétanilides, qui sur le noyau anilide peuvent être éventuellement substitués par du chlore, ou des radicaux alkyle ou alcoxy en Cₗ-C₄ ou sulfo, ou bien 6-hydroxy-3-cyano ou 6-hydroxy-3-carbonamido-4-alkyl-2-pyridones, qui sur la position 1 sont substitués par des groupes alkyle en Cₗ-C₄ éventuellement substitués, par exemple méthyle, isopropyle, ß-hy- droxyéthyle, ß-aminoéthyle ou y-isopropoxypropyle ou par un radical phényle, et qui peuvent porter sur la position 4 un groupe alkyle en C₁-C₄, en particulier le groupe méthyle.

10. Procédé selon la revendication 9, caractérisé par le fait qu'on utilise un mélange de colorants de formule 1 dans lesquels B et D, indépendamment l'un de l'autre, désignent chacun le reste d'un des copulants ci-après : 1- ou 2-naphtol éventuellement substitués par un groupe sulfo, m-phénylènediamine, résorcine, P-alkyl-(C₁-C₆)phénol, 1-phényl-3-méthyl-5-pyrazolone ou acétoacétanilide, le groupe phényle dans les deux derniers composés mentionnés pouvant être substitué par des radicaux alkyle en C₁-C₄, alcoxy en C₁-C₄, chloro ou sulfo.

11. Procédé selon la revendication 1, caractérisé par le fait qu'on utilise un mélange de colorants qui correspondent à la formule Il : 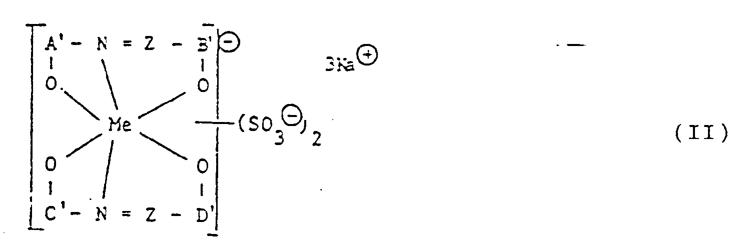 dans laquelle :
chaque Z est un atome d'azote ou un groupe CH,
A' et C' désignent chacun le reste d'un 1-hydroxy-2-aminobenzène, qui porte sur la position 4 ou 5 un groupe nitro ou bien le reste d'un 1-hydroxy-2-aminobenzène qui porte sur la position 4 un groupe nitro et sur la position 6 un groupe sulfo, ou bien le reste d'un 1-hydroxy-2-aminobenzène, qui porte sur la position 6 un groupe nitro et sur la position 4 un groupe sulfo,
B' et D' désignent chacun le reste d'un des copulants suivants, dans le cas où Z est un atome d'azote 1- ou 2-naphtol éventuellement substitués par un groupe sulfo, m-phénylènediamine, résorcine, p-alkyl(C₁-C₆)-phénol, 1-phényl-3-méthyl-5-pyrazolone ou acétoacétanilide, le groupe phényle dans les deux derniers composés mentionnés pouvant être substitué par un groupe alkyle en C₁-C₄, alcoxy en C₁-C₄, chloro ou sulfo, ou bien dans le cas où Z est le groupe CH, le reste d'un o-hydroxybenzaldéhyde ou d'un o-hydroxy- naphtaldéhyde, qui peut être substitué par un groupe phénylazoïque ou sulfophénylazoï- que,
Me est le cobalt ou le chrome, et
Ka^{⊕} désigne un cation.

12. Procédé selon la revendication 11, caractérisé par le fait qu'on utilise un mélange de colorants contenant :
a) un colorant de formule III : 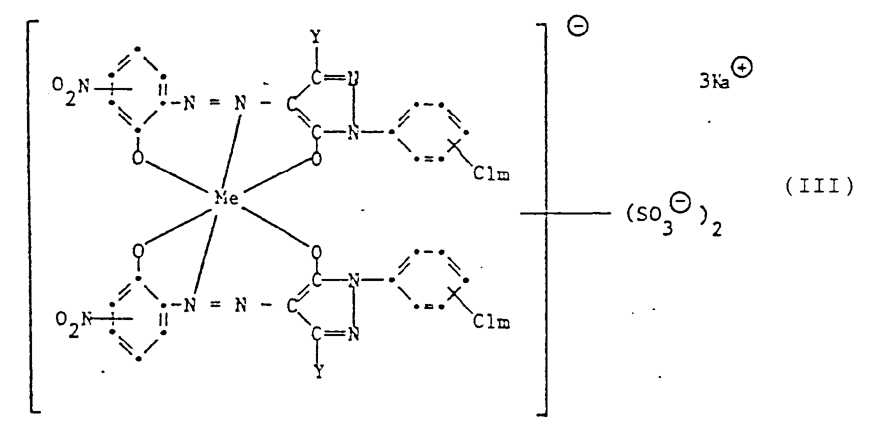 dans laquelle m est un nombre entier de 0 à 2, Me est le cobalt ou le chrome, Ka^{⊕} un cation et Y désigne un groupe méthyle, -CONH₂ ou -CONHR, où R est un groupe alkyle ayant 1 à 4 atomes de carbone,
b) un colorant de formule IV: 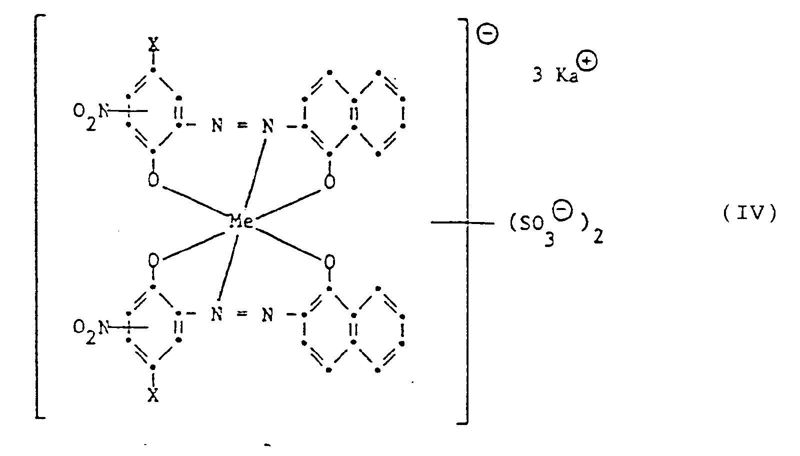 dans laquelle X est l'hydrogène, le chlore, un groupe méthyle ou méthoxy, Me est le cobalt ou le chrome, et Ka^{⊕} désigne un cation, ainsi que
c) un autre colorant de formule III mentionné ci-dessus ou bien un colorant de formule V : 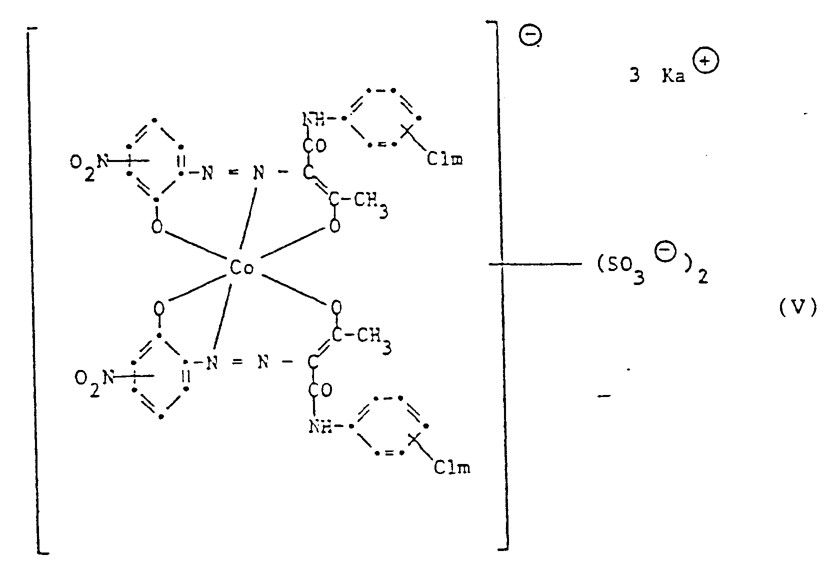 dans laquelle m est un nombre entier de 0 à 2 et Ka^{⊕} désigne un cation.

13. Procédé selon la revendication 12, caractérisé par le fait qu'on utilise un mélange de colorants qui contient au moins un des colorants suivants :

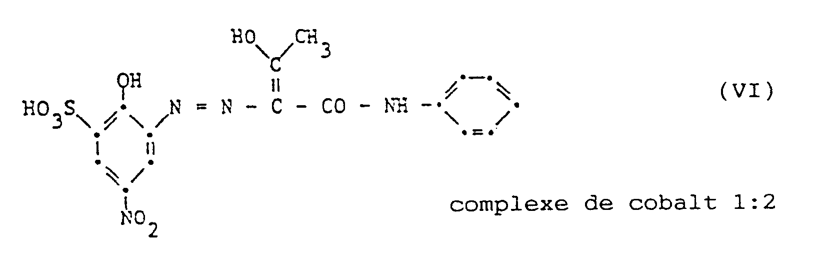

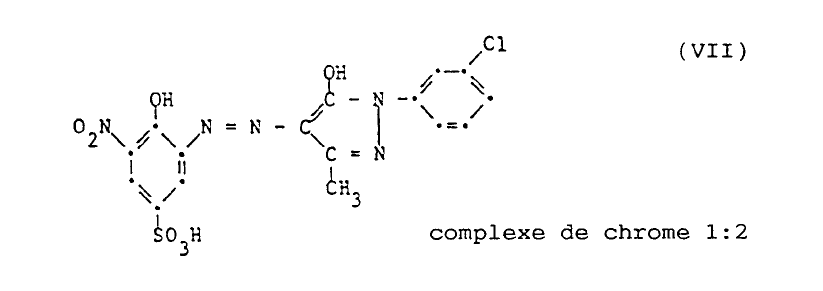

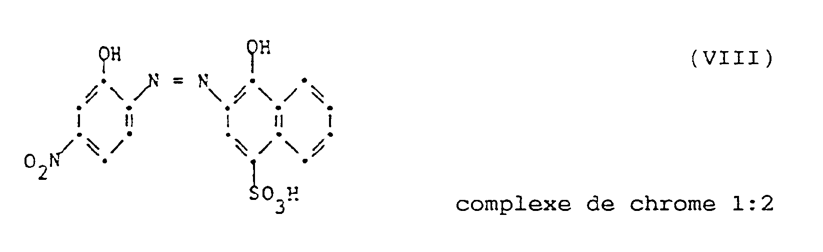

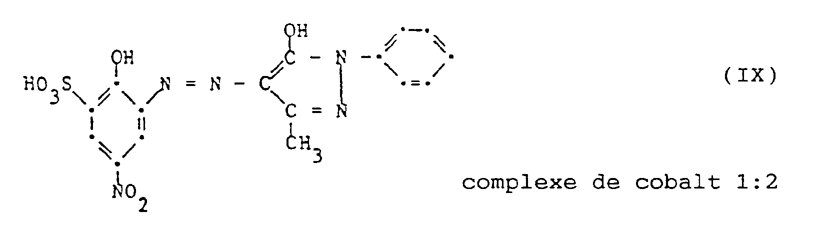

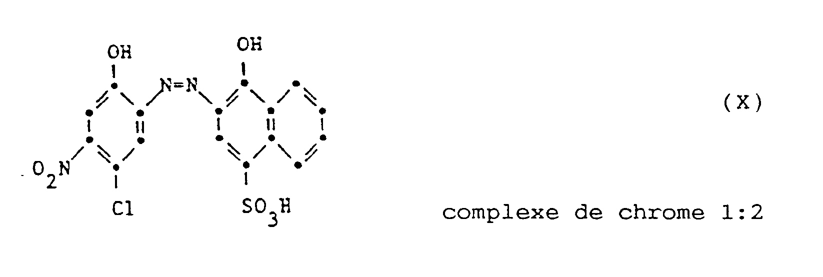

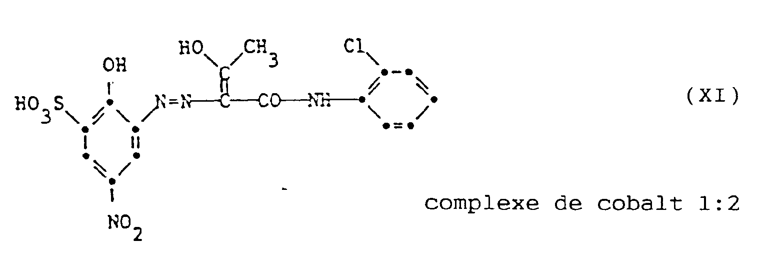

14. Procédé selon les revendications 1 à 13, caractérisé par le fait qu'on utilise un bain tinctorial qui contient en plus un adjuvant approfondissant la teinte.

15. Procédé selon la revendication 14, caractérisé par le fait qu'on utilise un bain tinctorial qui contient comme adjuvant approfondissant la teinte une alkylamine éthoxylée.

16. Le cuir teint d'après le procédé selon les revendications 1 à 15.
